# EUROPEAN PATENT SPECIFICATION

(11) **EP 3 091 756 B1**
(45) Date of publication and mention of the grant of the patent: **12.12.2018**
(21) Application number: 15866369.0
(22) Date of filing: 30.11.2015
(51) Int. Cl.: H04R 27/00, G08C 17/02, G06F 3/16, G04G 13/02, H04M 19/04

(54) **METHOD AND SYSTEM FOR SETTING ALARM CLOCK OF WIRELESS MUSIC SYSTEM**
VERFAHREN UND SYSTEM ZUR EINSTELLUNG EINER WECKERUHR EINES DRAHTLOSEN MUSIKSYSTEMS
PROCÉDÉ ET SYSTÈME DE RÉGLAGE D'HORLOGE D'ALARME DE SYSTÈME DE MUSIQUE SANS FIL

(30) Priority: 29.12.2014 CN 201410833869
(43) Date of publication of application: 09.11.2016
(73) Proprietor: Guang Dong Oppo Mobile Telecommunications Corp., Ltd, Dongguan, Guangdong 523860 (CN)
(72) Inventor: LIN, Shangbo, Dongguan Guangdong 523859 (CN)
(74) Representative: Johnson, Richard Alan
(86) International application number: PCT/CN2015/096057
(87) International publication number: WO 2016/107362

(56) References cited:
- WO-A1-2007/021266
- CN-A- 101 262 371
- CN-A- 104 064 205
- CN-A- 104 640 046

## Description

### TECHNICAL FIELD

The present disclosure relates to the technical field of wireless music system, and particularly to a wireless music system and a method for setting an alarm clock of the wireless music system.

### BACKGROUND

With the development of control terminal technology and wireless transmission technology, wireless music system is becoming more and more popular. For example, in a SONOS wireless intelligent audio system, a plurality of playback devices (such as wireless speakers) are connected to form a private network by wireless means (such as IEEE802.11 and other industrial standards), wherein the playback devices can be placed at different places (such as living room, bedroom, study room, and the like) at home because of the wireless connection.

A private network of the wireless music system is typically provided with an Internet oriented export(s) which can be connected to one or more routers, and the plurality of playback devices within the private network can have access to network music resources through the exports.

Correspondingly, an application software for the wireless music system is installed in the control terminal (such as smart phone, tablet PC, and the like), and users can access and manage the plurality of playback devices within the wireless music system through the control terminal. For example, the user can increase or decrease the number of playback devices for playing music synchronously, that is to say, the user can control a single playback device to play music or control all playback devices to play music cooperatively, or, the user can make some of the playback devices as a team and control the playback devices within the team to play music synchronously. For instance, the user can make the playback devices placed at the living room as a team and play music, here, the playback devices placed at the bedroom, etc. will not involved in music playing. Besides, various control of the playback devices within the wireless music system can also be achieved through the control terminal, such as searching music, creating a play list, start/pause, and selecting the next song/last song, etc.

In the Chinese patent publication CN104064205 A it is mentioned that, an alarm clock function can be arranged in the wireless music system to play music or ring tone (namely, bell) at a preset time point (refer to [0079] of the specification). In this application and other related arts, the way to set the alarm clock function of the wireless music system is as follows: after a control terminal accessing to the wireless music system which is consisted of a plurality of playback devices, the user has to set the alarm clock of the wireless music system manually and make sure that the alarm clock information is stored in a specified playback device within the wireless music system.

However, there are at least two limitations in the method mentioned above:
First, the alarm clock is set via the control terminal by the user, and if it is desired to apply the alarm clock to the wireless music system, it will need to store the alarm clock information in the wireless music system manually through the application software of the control terminal, which is complicated for the user.
Second, when certain playback devices within the wireless music system are turned off or removed, the alarm clock information of the wireless music system will become invalid if it is stored in the playback devices that have been turned off or removed.

### SUMMARY

The present disclosure aims to provide a method and system for setting an alarm clock of a wireless music system, which can synchronize the alarm clock information in a control terminal to the wireless music system automatically when the control terminal accessing to the system, and update the alarm clock of the wireless music system in time.

For this purpose, the present disclosure adopts the following technical schemes.

According to a first aspect of the present disclosure, it is provided a method for setting an alarm clock of a wireless music system, which includes: acquiring identification (hereinafter, ID) and alarm clock information of a control terminal automatically upon detecting an access of the control terminal by the wireless music system; establishing an association between the ID and the alarm clock information and storing the association in the wireless music system; and acquiring updated alarm clock information of the control terminal upon detecting an update of the alarm clock information of the control terminal; updating the alarm clock information associated with the control terminal in the wireless music system.

In at least one embodiment, the alarm clock information includes alarm clock time and alarm clock bell. After the process of storing the association in the wireless music system, the method further includes: determining whether the control terminal is currently in an access state when the alarm clock time arrives, and if yes, playing the alarm clock bell via the wireless music system.

In at least one embodiment, the alarm clock information includes alarm clock time. The process of storing the association in the wireless music system includes: inquiring the historical play record corresponding to the ID stored in the wireless music system, and finding the most-played song of the control terminal with the ID in the wireless music system; establishing a corresponding relationship between the song and the alarm clock information, and storing the association and the corresponding relationship in the wireless music system. After this, the method further includes: determining whether the control terminal is currently in an access state when the alarm clock time arrives, and if yes, playing the song corresponding to the alarm clock information via the wireless music system.

In at least one embodiment, the alarm clock information further includes specified information of a playback device. The process of playing the alarm clock bell when the alarm clock time arrives can be one of the follows: controlling the playback device corresponding to the specified information within the wireless music system to play the alarm clock bell; or controlling the playback device corresponding to the specified information within the wireless music system to play the song corresponding to the alarm clock information.

In at least one embodiment, the process of acquiring identification and alarm clock information of a control terminal automatically upon detecting an access of the control terminal by the wireless music system includes: acquiring the ID of the control terminal upon detecting the access of the control terminal by the wireless music system; and sending a request for acquiring the alarm clock information to the control terminal and receiving the alarm clock information returned from the control terminal.

In at least one embodiment, after the process of storing the association in the wireless music system, the method further includes: deleting the association from the wireless music system if it is determined that the non-access time length of the control terminal with the ID has reached a preset time length.

According to a second aspect of the present disclosure, it is provided a wireless music system, which includes a plurality of playback devices, an alarm clock acquiring unit, and an alarm clock updating unit. The alarm clock acquiring unit is configured to: acquire identification (hereinafter, ID) and alarm clock information of a control terminal automatically upon detecting an access of a control terminal; establish an association between the ID and the alarm clock information and store the association in the wireless music system. The alarm clock updating unit is configured to acquire updated alarm clock information upon detecting an update of the alarm clock information of the control terminal, and update the alarm clock information associated with the control terminal in the wireless music system.

In at least one embodiment, the alarm clock information includes alarm clock time and alarm clock bell. The wireless music system further includes an alarm clock controlling unit, which is configured to: acquire the ID of the currently accessed control terminal, find and turn on the alarm clock information associated with the ID; and play the alarm clock bell via the wireless music system when the alarm clock time arrives.

In at least one embodiment, the alarm clock information includes alarm clock time. The alarm clock acquiring unit includes a setting module, which is configured to: inquire the historical play record corresponding to the ID stored in the wireless music system, find the most-played song of the control terminal with the ID in the wireless music system; and establish a corresponding relationship between the song and the alarm clock information, and store the association and the corresponding relationship in the wireless music system.

The wireless music system further includes an alarm clock controlling unit, which is configured to: determine whether the control terminal is currently in an access state when the alarm clock time arrives, and if yes, play the song corresponding to the alarm clock information via the wireless music system.

In at least one embodiment, the alarm clock information further includes specified information of a playback device. The alarm clock controlling unit is specifically configured to: determine whether the control terminal is currently in an access state when the alarm clock time arrives, and if yes, control the playback device corresponding to the specified information within the wireless music system to play the alarm clock bell; and/or, acquire the ID of the currently accessed control terminal, find and turn on the alarm clock information associated with the ID; and control the playback device corresponding to the specified information within the wireless music system to play the song corresponding to the alarm clock information when the alarm clock time arrives.

In at least one embodiment, the alarm clock acquiring unit includes a setting module, which is configured to: acquire the ID of the control terminal upon detecting the access of the control terminal; send a request for acquiring the alarm clock information to the control terminal and receive the alarm clock information returned from the control terminal.

In at least one embodiment, the alarm clock updating unit is further configured to delete the association from the wireless music system if it is determined that the non-access time length of the control terminal with the ID has reached a preset time length.

According to a third aspect of the present disclosure, it is provided an apparatus, which includes: one or more processors and a memory; wherein one or more programs are stored in the memory, and when executed by the one or more processors, adapted to perform the method for setting an alarm clock of a wireless music system according to the first aspect of the present disclosure.

Through the technical schemes as described above, that is, by acquiring the ID and alarm clock information of the control terminal automatically upon detecting the access of the control terminal by the wireless music system, establishing an association between the ID and the alarm clock information and storing the association in the wireless music system, and deleting the association from the wireless music system if it is determined that the non-access time length of the control terminal with the ID has reached a preset time length, at least the following beneficial effects can be achieved: the alarm clock information in the control terminal can be synchronized to the wireless music system automatically when the control terminal accessing to the wireless music system, and the alarm clock information of the wireless music system can be updated in time, which makes the setting of the alarm clock of the wireless music system more convenient and reliable.

### BRIEF DESCRIPTION OF THE DRAWINGS

In order to illustrate the technical solutions of the present disclosure or the related art more clearly, a brief description of the accompanying drawings used herein is given below. Obviously, the drawings listed below are only examples, and a person skilled in the art should be noted that, other drawings can also be obtained on the basis of these exemplary drawings without creative work.
FIG. 1 is a structure schematic diagram illustrating a wireless music system of the present disclosure.
FIG. 2 is a flow chart illustrating the method for setting an alarm clock of a wireless music system according to a first embodiment of the present disclosure.
FIG. 3 is a flow chart illustrating the method for setting an alarm clock of a wireless music system according to a second embodiment of the present disclosure.
FIG. 4 is a structure schematic diagram illustrating a system for setting an alarm clock of a wireless music system according to a third embodiment of the present disclosure.

### DETAILED DESCRIPTION OF ILLUSTRATED EMBODIMENTS

The technical solutions of the embodiments of the present disclosure will now be described clearly and completely taken in conjunction with the accompanying drawings; it will be apparent to one of ordinary skill in the art that, the embodiments described below are merely a part of the disclosure and other embodiments obtained out of them without creative work will fall into the protection range of the present disclosure either.

### First embodiment

In this embodiment, a method for setting an alarm clock of a wireless music system is described, which includes: acquiring identification (hereinafter, ID) and alarm clock information of a control terminal automatically upon detecting an access of the control terminal by the wireless music system; establishing an association between the ID and the alarm clock information and storing the association in the wireless music system; and acquiring updated alarm clock information of the control terminal upon detecting an update of the alarm clock information of the control terminal; updating the alarm clock information associated with the control terminal in the wireless music system.

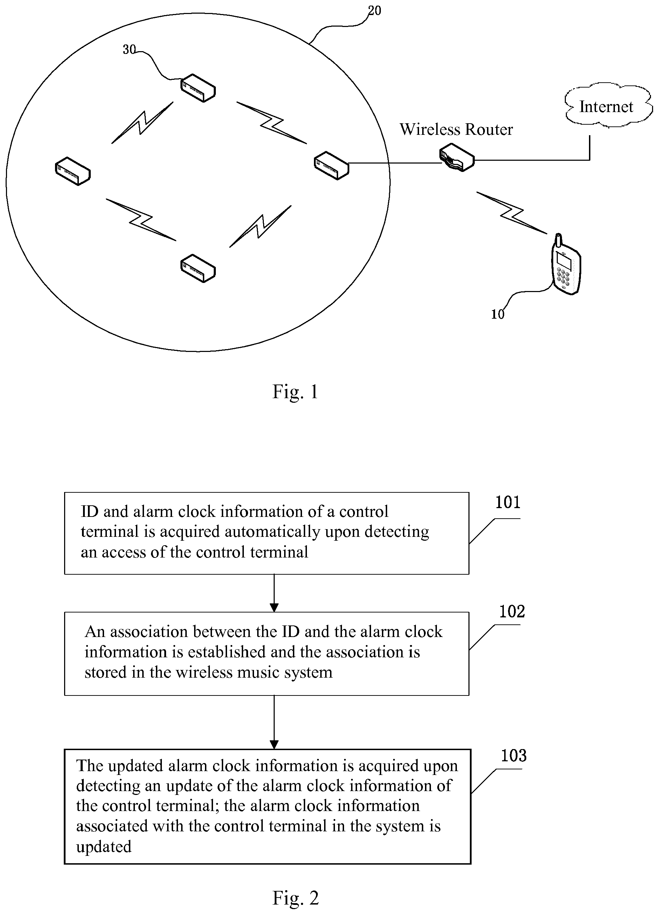

Refer to FIG. 2 for detailed description. FIG.2 is a flow chart illustrating the method for setting an alarm clock of a wireless music system according to the first embodiment of the present disclosure. As shown in FIG. 2, the method begins at block 101.

At block 101, identification (hereinafter, ID) and alarm clock information of a control terminal are acquired automatically upon detecting an access of the control terminal by the wireless music system.

In this embodiment, the structure of the wireless music system can be as shown in FIG. 1, multiple playback devices 30 of the wireless music system 20 are connected to each other wirelessly and an external interface(s) is provided, wherein a connection with the Internet and/or a control terminal can be achieved via the external interface. In addition, other network topologies can also be used in the wireless music system 20, and the disclosure is therefore not limited thereto.

In this embodiment, the control terminal can be one of a smart phone, a tablet computer, and the like. Application software for controlling the wireless music system is pre-installed in the control terminal, and operation instructions can be received via a user interface of the application software, whereby realizing management and control of the wireless music system.

In this embodiment, the playback device can be one of Bluetooth wireless speaker, WiFi wireless speaker, 2.4G wireless speaker, FM wireless speaker, and the like. In at least one embodiment, each playback device within the wireless music system has a unique identifier (such as Equipment number, name, MAC address, and the like.)

In this embodiment, the alarm clock information can be preset at the control terminal by a user; when the user with the control terminal entered into the network area of the wireless music system, the wireless music system will acquire the ID of the control terminal automatically once the access of the control terminal is detected; in addition, the wireless music system can send a request for acquiring the alarm clock information to the control terminal and receive the alarm clock information returned from the control terminal. The ID of the control terminal is used to distinguish multiple control terminals accessing the same wireless music system.

At block 102, an association between the ID and the alarm clock information is established, and the association is stored in the wireless music system.

In the first embodiment, the alarm clock information of multiple control terminals with different IDs can be synchronized to the same wireless music system by establishing the association between the ID and the alarm clock information; besides, within the wireless music system, the alarm clocks corresponding to the multiple control terminals will not interfere with each other.

In this embodiment, the association can be stored in different locations, which will be described in detail below with refer to Examples 1-3, but the present disclosure is not limited thereto.

Example 1: the association can be stored in all of the playback devices within the wireless music system. When the alarm clock time of the association arrives, all or a part of the playback devices will be controlled to conduct alarm clock reminds if a corresponding control terminal is in an access state to the wireless music system, in which situation the alarm clock of the wireless music system will not be invalid or loss even if one or more playback devices are turned off or removed.

Example 2: the association can be stored in a playback system which is used for external connection within the wireless music system, from which other playback devices can acquire the alarm clock information. When the alarm clock time of the association arrives, the playback device can notify a corresponding playback device to conduct alarm clock reminds if the corresponding control terminal is in an access state to the wireless music system.

Example 3: the association can be stored in one or more user-specified playback devices within the wireless music system, for example, stored in the playback device in the main bedroom only; wherein the alarm clock information further includes the specified information of a playback device, and when the alarm clock time arrives, the playback device corresponding to the specified information within the wireless music system will be controlled to conduct alarm clock reminds if a corresponding control terminal is in an access state to the wireless music system.

It should be noted that, there is no limits as to the process of conducting alarm clock reminds, for example, the wireless music system can use the alarm clock bell set by the control terminal to do this; or, the wireless music system can identify user preferences via the play record of the user and use the song of user preference to do this.

At block 103, updated alarm clock information is acquired upon detecting an update of the alarm clock information of the control terminal; and the alarm clock information associated with the control terminal in the wireless music system is updated.

In this embodiment, the alarm clock information of the control terminal can be modified by the user after being synchronized to the wireless music system. In this situation, if the control terminal is currently in an access state to the wireless music system, the wireless music system can update the stored association based on the modified alarm clock information, such that the alarm clock of the wireless music system and the alarm clock of the control terminal will remain consistent with each other; on the other hand, if the control terminal is currently in a non-access state to the wireless music system, the modified alarm clock information can be acquired when the control terminal access to the wireless music system next time to update the stored association, such that the alarm clock of the wireless music system and the alarm clock of the control terminal will remain consistent with each other. In the related art, after modifying the alarm clock of the control terminal, if the user forgets to synchronize the modified alarm clock information to the wireless music system, the alarm clock of the wireless music system and the alarm clock of the control terminal will be inconsistent with each other, which is inconvenient for the user. It can be seen that, compared with the related art, the technical solution of this embodiment can maintain the consistency between the alarm clock of the wireless music system and the alarm clock of the control terminal.

Through the technical scheme of the first embodiment, the wireless music system can synchronize the alarm clock information of the control terminal to its own alarm clock automatically when the control terminal accessing to the wireless music system, and update its own alarm clock information in time. Thus, there is no need to set or update the alarm clock of the wireless music system manually by the user, which can avoid the adverse effects caused by untimely update and provide the user with convenience.

### Second embodiment

Take into account the limited storage space of the wireless music system and the need to shorten the response time of the wireless music system to the alarm clock, on the basis of the first embodiment, an effective time is set for the alarm clock of the wireless music system in the second embodiment, wherein an alarm clock information will be deleted from the system if it already exceeds the effective time so as to free-up storage space and eliminate the impact on the response time of the system to the alarm clock caused by too much association information stored in the wireless music system.

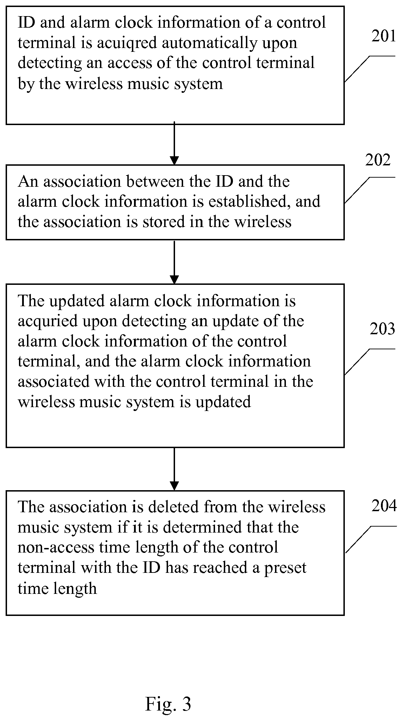

In the following, the second embodiment of the present disclosure will be described in detail with refer to FIG. 3, which is a flow chart illustrating the method for setting an alarm clock of a wireless music system according to the second embodiment. As shown in FIG. 3, the method begins at block 201.

At block 201, identification (hereinafter, ID) and alarm clock information of a control terminal are acquired automatically upon detecting an access of the control terminal by the wireless music system.

As described in the first embodiment, the structure of the wireless music system of the second embodiment can be as shown in FIG. 1, multiple playback devices 30 of the wireless music system 20 are connected to each other through wireless mode and an external interface(s) is provided, wherein a connection with the Internet and/or a control terminal can be achieved via the external interface. As mentioned above, the control terminal can be one of a smart phone, a tablet computer, and the like. Application software for controlling the wireless music system is pre-installed in the control terminal, and operation instructions can be received via a user interface of the application software, whereby realizing management and control of the wireless music system. As to the playback device, it can be one of Bluetooth wireless speaker, WiFi wireless speaker, 2.4G wireless speaker, FM wireless speaker, and the like. In at least one embodiment, each playback device within the wireless music system has a unique identifier (such as Equipment number, name, MAC address, and the like.)

In the second embodiment, the alarm clock information can be preset at the control terminal by a user; when the user with the control terminal entered into the network area of the wireless music system, the wireless music system will acquire the ID of the control terminal automatically once the access of the control terminal is detected; thereafter, the wireless system can send a request for acquiring the alarm clock information to the control terminal and receive the alarm clock information returned from the control terminal (that is, ID and alarm clock information of the control terminal is acquired upon detecting the access of the control terminal, as described in block 201). The ID of the control terminal is used to distinguish multiple control terminals accessing the same wireless music system.

At block 202, an association between the ID and the alarm clock information is established and the association is stored in the wireless music system.

In at least one embodiment, the alarm clock information can include alarm clock time and alarm clock bell, and as described in the first embodiment, after storing the association between the ID and the alarm clock information, the wireless music system will acquire the ID of the currently accessed control terminal in real time, and then find and turn on the alarm clock information associated with the ID. Thereafter, the wireless music system will determine whether the control terminal is currently in an access state; if yes, the alarm clock bell will be played via the wireless music system when the alarm clock arrives, more specifically, if the alarm clock information further comprises specified information of a playback device, the playback device corresponding to the specified information within the wireless music system will be controlled to play the alarm clock bell. That is to say, the wireless music system will play the alarm clock bell being set at the control terminal to conduct alarm clock reminds, in other words, the wireless music system can play the same alarm clock bell with the smart terminal of the user; otherwise, the alarm clock information will be ignored and there will be no reminder.

In at least one alternative embodiment, the alarm clock information can include alarm clock time, but no alarm clock bell is included here. Corresponding to this, the wireless music system will inquire the historical play record corresponding to the ID stored in the system, and find the most-played song of the control terminal with the ID in the wireless music system, that is to say, identify the song of user preference of the control terminal according to the historical play record. Thereafter, the wireless music system will establish a corresponding relationship between the song and the alarm clock information, and store the association and the corresponding relationship therein (that is, the association is stored in the wireless music system, as described in block 202). Then the wireless music system will acquire the ID of the currently accessed control terminal in real time and determine whether the control terminal is currently in an access state; if yes, when the alarm clock time arrives, the identified song of user preference will be played via the wireless music system to conduct alarm clock reminds, more specifically, if the alarm clock information further comprises specified information of a playback device, the playback device corresponding to the specified information within the wireless music system will be controlled to play the song; otherwise, the alarm clock information will be ignored and there will be no reminder.

One example is that, according to the historical play record of User A, it is found that most of the songs played by User A recently are English song, then at the time of synchronizing the alarm clock information of the smart phone of User A, the wireless music system will configure the most-played English song to be the alarm clock bell of the alarm clock. In at least one embodiment, the historical play record can be set to be the play record of last month. Through this alarm clock setting mode, the most recent favorite songs of the user can be identified according to the update of the play record of the user, such that the song used for alarm clock reminds can be updated in real time, which is more user-friendly and intelligent.

In order to better understand the technical solution of the embodiment, a specific example is provided in the following, in which there is an alarm clock setting of 8 a.m. in the smart phone of the user. When the smart phone is connected with the wireless music system, the alarm clock information will be synchronized to the wireless music system automatically, that is to say, an alarm clock of 8 a.m. will be added to the wireless music system automatically, in other words, the wireless music system will play a corresponding song or corresponding alarm clock bell at 8 a.m. automatically.

In this embodiment, when control terminals of multiple users using the same wireless music system, all the alarm clock information thereof will be recorded, stored, and applied by the wireless music system respectively. Each user can specify the playback devices within the wireless music system to which the alarm clock will be applied without interfering with each other. For example, User A can specify that the alarm clock of his or her smart phone be applied to the playback device in bedroom 1, and User B can specify that the alarm clock of his or her smart phone be applied to the playback device in bedroom 2 only.

At block 203, updated alarm clock information is acquired upon detecting an update of the alarm clock information of the control terminal, and the alarm clock information associated with the control terminal in the wireless music system is updated.

In this embodiment, if the control terminal is currently in an access state to the wireless music system, the system can update the stored association based on the modified alarm clock information; on the other hand, if the control terminal is currently in a non-access state to the wireless music system, the system can acquire the modified alarm clock information when the control terminal accessing to it next time so as to update the stored association. For example, there is an alarm clock of 8 a.m. in the control terminal, which is synchronized to the wireless music system today and will be modified to be of 9 a.m. the next day, the modified alarm clock information will be synchronized to the wireless music system automatically once the control terminal access to the system. In the related art, after modifying the alarm clock of the control terminal, if the user forgets to synchronize the modified alarm clock information to the wireless music system, the alarm clock of the wireless music system and the alarm clock of the control terminal will be inconsistent with each other, which is inconvenient for the user. Compared with the related art, the technical solution of this embodiment can maintain the consistency between the alarm clock of the wireless music system and the alarm clock of the control terminal.

At block 204, the association is deleted from the wireless music system if it is determined that the non-access time length of the control terminal with the ID has reached a preset time length.

In this embodiment, for example, the preset time length is 48 hours, that is to say, if the control terminal has not access to the wireless music system for up to 48 hours, the alarm clock setting of the control terminal will be deleted from the wireless music system. When the control terminal accessing to the wireless music system again, the alarm clock of the control terminal will be re-synchronized and applied to the wireless music system.

By means of the second embodiment, when the control terminal accessing to the wireless music system, the system will set the alarm clock information of the control terminal to be the alarm clock of its own synchronously so as to update the alarm clock information in time. Thus, there is no need to set or update the alarm clock of the wireless music system manually by the user, which can avoid the adverse effects caused by untimely update and provide the user with convenience. Besides, an alarm clock of a control terminal will be deleted from the wireless music system if it is detected that the control terminal had not accessed to the system for a preset time length, so as to free-up storage space and shorten the response time of the system to the alarm clock.

### Third embodiment

The third embodiment of the present disclosure relates to a wireless music system, which belongs to the same conception as the method embodiments as described above. For the un-illustrated details, please refer to the above-mentioned method embodiments.

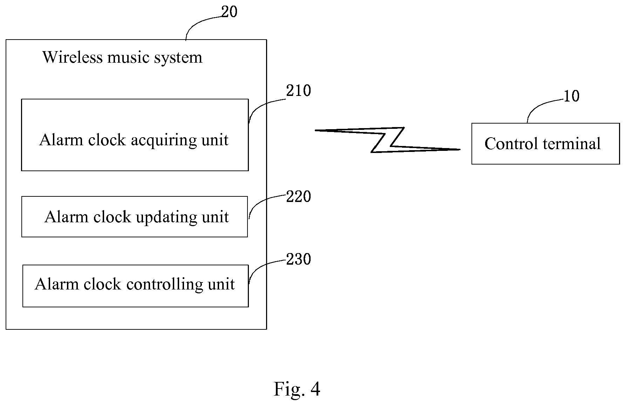

The system according to the third embodiment will now be described in detail with refer to FIG. 4, which is a structure schematic diagram illustrating the system.

As shown in FIG. 1 and FIG. 4, the wireless music system includes: a plurality of playback devices 30, a control terminal 10 and a wireless music system 20, the multiple playback devices 30 are connected to each other wirelessly. The alarm clock acquiring unit 210 is configured to: acquire identification (hereinafter, ID) and alarm clock information of a control terminal automatically upon detecting an access of the control terminal; establish an association between the ID and the alarm clock information and store the association in the wireless music system. The alarm clock updating unit 220 is configured to acquire updated alarm clock information upon detecting an update of the alarm clock information of the control terminal and update the alarm clock information associated with the control terminal in the wireless music system.

For purpose of explanation and not limitation, a control terminal 10 is also illustrated in FIG. 4, wherein and the control terminal 10 and the wireless music system 20 are connected to each other through a wireless network. Specifically, the control terminal 10 can be one of a smart phone, a tablet computer, and the like, and the playback device 30 can be one of Bluetooth wireless speaker, WiFi wireless speaker, 2.4G wireless speaker, FM wireless speaker, and the like.

In this embodiment, the alarm clock acquiring unit 210 and the alarm clock updating unit 220 will now be described below in detail respectively.

The alarm clock acquiring unit 210 is configured to: acquire ID and alarm clock information of the control terminal 10 automatically upon detecting an access of the control terminal 10; establish an association between the ID and the alarm clock information, and store the association in the wireless music system.

In this embodiment, the control terminal 10 has preset alarm clock information and a unique ID. Upon detecting the access of the control terminal 10, the alarm clock acquiring unit 210 can acquire the ID of the control terminal 10 at the first place; and send a request for acquiring the alarm clock information to the control terminal 10 and receive the alarm clock information returned from the control terminal 10.

In this embodiment, the alarm clock information of multiple control terminals with different IDs can be synchronized to the same wireless music system by establishing the association between the ID and the alarm clock information; besides, within the wireless music system, the alarm clocks corresponding to the multiple control terminals will not interfere with each other.

In this embodiment, the association can be stored in different locations, which will be described in detail below with refer to Examples 1-3, but the present disclosure is not limited thereto.

Example 1: the association can be stored in all of the playback devices within the wireless music system. When the alarm clock time of the association arrives, all or a part of the playback devices will be controlled to conduct alarm clock reminds if a corresponding control terminal is in an access state to the wireless music system, in which situation the alarm clock of the wireless music system will not be invalid or loss even if one or more playback devices are turned off or removed.

Example 2: the association can be stored in a playback system which is used for external connection within the wireless music system, from which other playback devices can acquire the alarm clock information. When the alarm clock time of the association arrives, the playback device can notify a corresponding playback device to conduct alarm clock reminds if the corresponding control terminal is in an access state to the wireless music system.

Example 3: the association can be stored in one or more user-specified playback devices within the wireless music system, for example, stored in the playback device in the main bedroom only; wherein the alarm clock information further includes the specified information of a playback device and when the alarm clock time arrives, the playback device corresponding to the specified information within the wireless music system will be controlled to conduct alarm clock reminds if a corresponding control terminal is in an access state to the wireless music system.

In at least one embodiment, the alarm clock information includes alarm clock time and alarm clock bell, and the wireless music system 20 further includes: an alarm clock controlling unit 230, configured to acquire the ID of the currently accessed control terminal, and find and turn on the alarm clock information associated with the ID. The alarm clock bell will be played via the wireless music system when the alarm clock time arrives. The alarm clock information can further include specified information of a playback device, and the alarm clock controlling unit 230 is specifically configured to acquire the ID of the currently accessed control terminal so as to determine whether the control terminal is currently in an access state; if yes, when the alarm clock time arrives, control the playback device corresponding to the specified information within the wireless music system to play the alarm clock bell; otherwise, the alarm clock information will be ignored and there will be no reminder.

In at least one embodiment, the alarm clock information can include alarm clock time. Corresponding to this, the alarm clock acquiring unit 210 includes a setting module (not illustrated in the figure), which is configured to inquire the historical play record corresponding to the ID stored in the system and find the most-played song of the control terminal with the ID in the wireless music system, thereafter, establish a corresponding relationship between the song and the alarm clock information and store the association and the corresponding relationship in the wireless music system.

The alarm clock controlling unit 230 is configured to: acquire the ID of the currently accessed control terminal, find and turn on the alarm clock information associated with the ID; and play the alarm clock bell via the wireless music system when the alarm clock time arrives.

Alternatively, the alarm clock information can include specified information of a playback device. Here, the alarm clock controlling unit 230 is configured to: acquire the ID of the currently accessed control terminal to determine whether the control terminal is in an access state; and if yes, control the playback device corresponding to the specified information in the wireless music system to play the alarm clock bell when the alarm clock time arrives; otherwise, the alarm clock information will be ignored and there will be no reminder.

In at least one embodiment, the historical play record can be the play record of last month.

The alarm clock updating 220 is configured to acquire updated alarm clock information upon detecting an update of the alarm clock information of the control terminal, and update the alarm clock information associated with the control terminal in the wireless music system.

In this embodiment, the alarm clock information of the control terminal can be modified by the user after being synchronized to the wireless music system. In this situation, if the control terminal is currently in an access state to the wireless music system, the wireless music system can update the stored association based on the modified alarm clock information; otherwise, if the control terminal is currently in a non-access state to the wireless music system, the modified alarm clock information can be acquired when the control terminal access to the wireless music system next time to update the stored association. On the contrary, in the related art, after modifying the alarm clock of the control terminal, if the user forgets to synchronize the modified alarm clock information to the wireless music system, the alarm clock of the wireless music system and the alarm clock of the control terminal will be inconsistent with each other, which is inconvenient for the user.

Through the third Embodiment as described above, the wireless music system can synchronize the alarm clock information of the control terminal to its own alarm clock automatically when the control terminal accessed to the wireless music system, and update its own alarm clock information in time, such that the alarm clock of the wireless music system and the alarm clock of the control terminal will remain consistent with each other.

### Fourth Embodiment

Take into account the limited storage space of the wireless music system and the need to shorten the response time of the wireless music system to the alarm clock, on the basis of the third embodiment, the alarm clock updating unit 220 of the wireless music system 20 according to the fourth embodiment is further configured to: delete the association from the wireless music system if it is determined that the non-access time length of the control terminal 10 with the ID has reached a preset time length.

As one example, the preset time length is 48 hours, that is to say, if the control terminal has not accessed to the wireless music system for up to 48 hours, the alarm clock setting of the control terminal will be deleted from the wireless music system. When the control terminal accessing to the wireless music system again, the alarm clock of the control terminal will be re-synchronized and applied to the wireless music system.

Through the fourth embodiment as described above, when the access to the wireless music system of the control terminal is detected, the system will synchronize the alarm clock information of the control terminal automatically so as to update the alarm clock information of the wireless music system in time, such that the alarm clock of the wireless music system and the alarm clock of the corresponding control terminal will remain synchronized with each other, and the wireless music system can maintain the system alarm clock based on the access of the control terminal, which provides convenience for the user.

## Claims

1. A method for setting an alarm clock of a wireless music system, comprising:
acquiring identification and alarm clock information of a control terminal automatically upon detecting an access of the control terminal by the wireless music system;
establishing an association between the identification and the alarm clock information and storing the association in the wireless music system; and
acquiring updated alarm clock information of the control terminal upon detecting an update of the alarm clock information of the control terminal, and updating the alarm clock information associated with the control terminal in the wireless music system.

2. The method for setting an alarm clock of a wireless music system of claim 1, wherein the alarm clock information comprises alarm clock time and alarm clock bell; after storing the association in the wireless music system, the method further comprises:
determining whether the control terminal is currently in an access state when the alarm clock time arrives, and if yes, playing the alarm clock bell via the wireless music system.

3. The method for setting an alarm clock of a wireless music system of claim 1, wherein the alarm clock information comprises alarm clock time; storing the association in the wireless music system comprises:
inquiring the historical play record corresponding to the identification stored in the wireless music system, and finding the most-played song of the control terminal with the identification in the wireless music system; and
establishing a corresponding relationship between the song and the alarm clock information, and storing the association and the corresponding relationship in the wireless music system;
and after storing the association and the corresponding relationship in the wireless music system, the method further comprises: determining whether the control terminal is currently in an access state when the alarm clock time arrives, and if yes, playing the song corresponding to the alarm clock information via the wireless music system.

4. The method for setting an alarm clock of a wireless music system of claim 2, wherein the alarm clock information further comprises specified information of a playback device;
playing the alarm clock bell via the wireless music system comprises: controlling the playback device corresponding to the specified information within the wireless music system to play the alarm clock bell.

5. The method for setting an alarm clock of a wireless music system of claim 3, wherein the alarm clock information further comprises specified information of a playback device;
playing the song corresponding to the alarm clock information via the wireless music system comprises: controlling the playback device corresponding to the specified information within the wireless music system to play the song corresponding to the alarm clock information.

6. The method for setting an alarm clock of a wireless music system of any of claims 1-5, wherein acquiring identification and alarm clock information of the control terminal automatically upon detecting an access of the control terminal by the wireless music system comprises:
acquiring the identification of the control terminal upon detecting the access of the control terminal by the wireless music system; and
sending a request for acquiring the alarm clock information to the control terminal, and receiving the alarm clock information returned from the control terminal.

7. The method for setting an alarm clock of a wireless music system of any of claims 1-6, wherein after storing the association in the wireless music system, the method further comprises:
deleting the association from the wireless music system if it is determined that the non-access time length of the control terminal with the identification has reached a preset time length.

8. A wireless music system (20) comprising, a plurality of playback devices (30);
an alarm clock acquiring unit (210), configured to: acquire identification and alarm clock information of a control terminal (10) automatically upon detecting an access of the control terminal; and establish an association between the identification and the alarm clock information and store the association in the wireless music system (20); and
an alarm clock updating unit (220), configured to: acquire updated alarm clock information upon detecting an update of the alarm clock information of the control terminal (10); and update the alarm clock information associated with the control terminal (10) in the wireless music system (20).

9. The wireless music system (20) of claim 8, wherein the alarm clock information comprises alarm clock time and alarm clock bell; the wireless music system (20) further comprises an alarm clock controlling unit (230), which is configured to: acquire the identification of the currently accessed control terminal (10), find and turn on the alarm clock information associated with the identification; and play the alarm clock bell via the wireless music system (20) when the alarm clock time arrives.

10. The wireless music system (20) of claim 8, wherein the alarm clock information comprises alarm clock time; the alarm clock acquiring unit (210) comprises a setting module, which is configured to: inquire the historical play record corresponding to the identification stored in the wireless music system, find the most-played song of the control terminal (10) with the identification in the wireless music system (20); and establish a corresponding relationship between the song and the alarm clock information, and store the association and the corresponding relationship in the wireless music system (20);
the wireless music system (20) further comprises an alarm clock controlling unit (230), which is configured to: determine whether the control terminal (10) is currently in an access state when the alarm clock time arrives, and if yes, play the song corresponding to the alarm clock information via the wireless music system (20).

11. The wireless music system (20) of claim 9[[11]], wherein the alarm clock information further comprises specified information of a playback device (30); and the alarm clock controlling unit (230) is configured to: determine whether the control terminal(10) is currently in an access state when the alarm clock time arrives; and if yes, control the playback device (30) corresponding to the specified information within the wireless music system (20) to play the alarm clock bell.

12. The wireless music system (20) of claim 10, wherein the alarm clock information further comprises specified information of a playback device (30); the alarm clock controlling unit (230) is configured to: acquire the identification of the currently accessed control terminal (10), find and turn on the alarm clock information associated with the identification; and control the playback device (30) corresponding to the specified information within the wireless music system (20) to play the song corresponding to the alarm clock information when the alarm clock time arrives.

13. The wireless music system (20) of any of claims 8-12, wherein the alarm clock acquiring unit (210) comprises a setting module, which is configured to: acquire the identification of the control terminal (10) upon detecting the access of the control terminal (10); and send a request for acquiring the alarm clock information to the control terminal (10) and receive the alarm clock information returned from the control terminal (10).

14. The wireless music system (20) of any of claims 8-13, wherein the alarm clock updating unit (230) is further configured to delete the association from the wireless music system (20) if it is determined that the non-access time length of the control terminal (10) with the identification has reached a preset time length.

15. An apparatus, comprising:
one or more processors;
a memory; and
one or more programs stored in the memory, when executed by the one or more processors, adapted to perform the method of any of the claims 1-7.

## Patentansprüche

1. Verfahren zum Einstellen einer Weckuhr einer Drahtlosmusiksystems, Folgendes umfassend:
automatisches Erfassen von Identifizierungs- und Weckuhrinformationen eines Steuerendgeräts nach dem Detektieren eines Zugriffs auf das Steuerendgerät durch das Drahtlosmusiksystem;
Herstellen einer Zuordnung zwischen den Identifizierungs- und den Weckuhrinformationen und Speichern der Zuordnung im Drahtlosmusiksystem; und
Erfassen von aktualisierten Weckuhrinformationen des Steuerendgeräts bei Detektion einer Aktualisierung der Weckuhrinformationen des Steuerendgeräts und Aktualisieren der dem Steuerendgerät im Drahtlosmusiksystem zugeordneten Weckuhrinformationen.

2. Verfahren zum Einstellen einer Weckuhr eines Drahtlosmusiksystems nach Anspruch 1, wobei die Weckuhrinformationen Weckuhrzeit und Weckuhrklingel umfassen; wobei nach dem Speichern der Zuordnung im Drahtlosmusiksystem das Verfahren ferner Folgendes umfasst:
Bestimmen, ob das Steuerendgerät sich aktuell in einem Zugriffszustand befindet, wenn die Weckuhrzeit bevorsteht, und, falls dies zutrifft, Abspielen des Weckuhrklingeltons über das Drahtlosmusiksystem.

3. Verfahren zum Einstellen einer Weckuhr eines Drahtlosmusiksystems nach Anspruch 1, wobei die Weckuhrinformationen die Weckuhrzeit umfassen; und das Speichern der Zuordnung im Drahtlosmusiksystem Folgendes umfasst:
Abfragen der Abspielaufzeichnungshistorie entsprechend den im Drahtlosmusiksystem gespeicherten Informationen und Finden des am häufigsten abgespielten Lieds des Steuerendgeräts mit der Identifizierung im Drahtlosmusiksystem; und
Herstellen einer entsprechenden Beziehung zwischen dem Lied und den Weckuhrinformationen und Speichern der Zuordnung und der entsprechenden Beziehung im Drahtlosmusiksystem;
nach dem Speichern der Zuordnung und der entsprechenden Beziehung im Drahtlosmusiksystem umfasst das Verfahren ferner Folgendes: Bestimmen, ob das Steuerendgerät sich aktuell in einem Zugriffszustand befindet, wenn die Weckuhrzeit bevorsteht, und, falls dies zutrifft, Abspielen des Lieds entsprechend den Weckuhrinformationen über das Drahtlosmusiksystem.

4. Verfahren zum Einstellen einer Weckuhr eines Drahtlosmusiksystems nach Anspruch 2, wobei die Weckuhrinformationen ferner spezifizierte Informationen einer Wiedergabevorrichtung umfassen; wobei
das Abspielen des Weckuhrklingeltons über das Drahtlosmusiksystem Folgendes umfasst: Steuern der Wiedergabevorrichtung entsprechend den spezifizierten Informationen im Drahtlosmusiksystem zum Abspielen des Weckuhrklingeltons.

5. Verfahren zum Einstellen einer Weckuhr eines Drahtlosmusiksystems nach Anspruch 3, wobei die Weckuhrinformationen ferner spezifizierte Informationen einer Wiedergabevorrichtung umfassen; wobei
das Abspielen des den Weckuhrinformationen entsprechenden Lieds über das Drahtlosmusiksystem Folgendes umfasst: Steuern der Wiedergabevorrichtung entsprechend den spezifizierten Informationen im Drahtlosmusiksystem, um das den Weckuhrinformationen entsprechenden Lied abzuspielen.

6. Verfahren zum Einstellen einer Weckuhr eines Drahtlosmusiksystems nach einem der Ansprüche 1 bis 5, wobei das automatische Erfassen von Identifizierungs- und Weckuhrinformationen des Steuerendgeräts nach dem Detektieren eines Zugriffs auf das Steuerendgerät durch das Drahtlosmusiksystem Folgendes umfasst:
Erfassen der Identifizierung des Steuerendgeräts nach dem Detektieren des Zugriffs auf das Steuerendgerät durch das Drahtlosmusiksystem; und
Senden einer Anfrage zur Einholung der Weckuhrinformationen an das Steuerendgerät und Empfangen der vom Steuerendgerät zurückgesendeten Weckuhrinformationen.

7. Verfahren zum Einstellen einer Weckuhr eines Drahtlosmusiksystems nach einem der Ansprüche 1 bis 6, wobei nach dem Speichern der Zuordnung im Drahtlosmusiksystem das Verfahren ferner Folgendes umfasst:
Löschen der Zuordnung aus dem Drahtlosmusiksystem, wenn bestimmt wird, dass die Nichtzugriffszeitdauer des Steuerendgeräts mit der Identifizierung eine vordefinierte Zeitdauer erreicht hat.

8. Drahtlosmusiksystem (20), umfassend eine Vielzahl von Wiedergabevorrichtungen (30);
eine Weckuhrerfassungseinheit (210), die konfiguriert ist, um: automatisch Identifizierungs- und Weckuhrinformationen eines Steuerendgeräts (10) nach dem Detektieren eines Zugriffs auf das Steuerendgerät zu erfassen; und eine Zuordnung zwischen den Identifizierungs- und den Weckuhrinformationen herzustellen und die Zuordnung im Drahtlosmusiksystem (20) zu speichern, und
eine Weckuhraktualisierungseinheit (220), die konfiguriert ist, um: aktualisierte Weckuhrinformationen nach dem Detektieren einer Aktualisierung der Weckuhrinformationen des Steuerendgeräts (10) zu erfassen; und die dem Steuerendgerät (10) im Drahtlosmusiksystem (20) zugeordneten Weckuhrinformationen zu aktualisieren.

9. Drahtlosmusiksystem (20) nach Anspruch 8, wobei die Weckuhrinformationen eine Weckuhrzeit und einen Weckuhrklingelton umfasst; wobei das Drahtlosmusiksystem (20) ferner eine Weckuhrsteuereinheit (230) umfasst, die konfiguriert ist, um: die Identifizierung des Steuerendgeräts (10), auf das aktuell zugegriffen wird, zu erfassen, die der Identifizierung zugeordneten Weckuhrinformationen zu finden und einzuschalten; und den Weckuhrklingelton über das Drahtlosmusiksystem (20) abzuspielen, wenn die Weckuhrzeit bevorsteht.

10. Drahtlosmusiksystem (20) nach Anspruch 8, wobei die Weckuhrinformationen eine Weckuhrzeit umfassen; die Weckuhrerfassungseinheit (210) ein Einstellmodul umfasst, das konfiguriert ist, um: die Abspielaufzeichnungshistorie, die der im Drahtlosmusiksystem gespeicherten Identifizierung entspricht, abzufragen, das am häufigsten abgespielte Lied des Steuerendgeräts (10) mit der Identifizierung im Drahtlosmusiksystem (20) zu finden; und eine entsprechende Beziehung zwischen dem Lied und den Weckuhrinformationen herzustellen und die Zuordnung und die entsprechende Beziehung im Drahtlosmusiksystem (20) zu speichern;
wobei das Drahtlosmusiksystem (20) ferner eine Weckuhrsteuereinheit (230) umfasst, die konfiguriert ist, um: zu bestimmen, ob das Steuerendgerät (10) sich aktuell in einem Zugriffszustand befindet, wenn die Weckuhrzeit bevorsteht, und falls dies zutrifft, das den Weckuhrinformationen entsprechende Lied über das Drahtlosmusiksystem abzuspielen.

11. Drahtlosmusiksystem (20) nach Anspruch 9 [[11]], wobei die Weckuhrinformationen ferner spezifizierte Informationen einer Wiedergabevorrichtung (30) umfassen; und die Weckuhrsteuereinheit (230) konfiguriert ist, um: zu bestimmen, ob sich das Steuerendgerät (10) aktuell in einem Zugriffszustand befindet, wenn die Weckuhrzeit bevorsteht; und, falls dies zutrifft, die Wiedergabevorrichtung (30), die den spezifizierten Informationen im Drahtlosmusiksystem (20) entsprecht, zu steuern, damit sie den Weckuhrklingelton abspielt.

12. Drahtlosmusiksystem (20) nach Anspruch 10, wobei die Weckuhrinformationen ferner spezifizierte Informationen einer Wiedergabevorrichtung (30) umfassen; die Weckuhrsteuereinheit (230) konfiguriert ist, um: die Identifizierung des Steuerendgeräts (10), auf das aktuell zugegriffen wird, zu erfassen, die der Identifizierung zugeordneten Weckuhrinformationen zu finden und einzuschalten; und die Wiedergabevorrichtung (30), die den spezifizierten Informationen entspricht, im Drahtlosmusiksystem (20) zu steuern, damit sie das den Weckuhrinformationen entsprechende Lied abspielt, wenn die Weckuhrzeit bevorsteht.

13. Drahtlosmusiksystem (20) nach einem der Ansprüche 8 bis 12, wobei die Weckuhrerfassungseinheit (210) ein Einstellmodul umfasst, das konfiguriert ist, um: die Identifizierung des Steuerendgeräts (10) nach dem Detektieren des Zugriffs auf das Steuerendgerät (10) zu erfassen, und eine Anfrage zum Erfassen der Weckuhrinformationen an das Steuerendgerät (10) zu senden und die vom Steuerendgerät (10) zurückgesendeten Weckuhrinformationen zu empfangen.

14. Drahtlosmusiksystem (20) nach einem der Ansprüche 8 bis 13, wobei die Weckuhraktualisierungseinheit (230) ferner konfiguriert ist, um die Zuordnung aus dem Drahtlosmusiksystem zu löschen, wenn bestimmt wird, dass die Nichtzugriffszeitdauer des Steuerendgeräts (10) mit der Identifizierung eine vordefinierte Zeitdauer erreicht hat.

15. Vorrichtung, Folgendes umfassend:
einen oder mehrere Prozessoren;
einen Speicher; und
ein oder mehrere im Speicher gespeicherte Programme, die, wenn sie durch den einen oder die mehreren Prozessoren ausgeführt werden, geeignet sind, um ein Verfahren nach einem der Ansprüche 1 bis 7 durchzuführen.

## Revendications

1. Procédé de réglage d'une horloge d'alarme d'un système de musique sans fil, comprenant les étapes consistant à :
acquérir de manière automatique des informations d'identification et d'horloge d'alarme d'un terminal de commande lors de la détection d'un accès du terminal de commande par le système de musique sans fil ;
établir une association entre les informations d'identification et d'horloge d'alarme, et mémoriser l'association dans le système de musique sans fil ; et
acquérir des informations d'horloge d'alarme mises à jour du terminal de commande lors de la détection d'une mise à jour des informations d'horloge d'alarme du terminal de commande, et mettre à jour les informations d'horloge d'alarme associées au terminal de commande dans le système de musique sans fil.

2. Procédé de réglage d'une horloge d'alarme d'un système de musique sans fil selon la revendication 1, dans lequel les informations d'horloge d'alarme comprennent un temps d'horloge d'alarme et une sonnerie d'horloge d'alarme ; après la mémorisation de l'association dans le système de musique sans fil, le procédé comprenant en outre l'étape consistant à :
déterminer si le terminal de commande est actuellement dans un état d'accès lorsque le temps d'horloge d'alarme arrive, et si tel est le cas, lire la sonnerie d'horloge d'alarme via le système de musique sans fil.

3. Procédé de réglage d'une horloge d'alarme d'un système de musique sans fil selon la revendication 1, dans lequel les informations d'horloge d'alarme comprennent le temps d'horloge d'alarme ; la mémorisation de l'association dans le système de musique sans fil comprenant les étapes consistant à :
rechercher l'enregistrement de lecture historique correspondant à l'identification mémorisée dans le système de musique sans fil, et trouver la chanson la plus lue du terminal de commande à l'aide de l'identification dans le système de musique sans fil ; et
établir une relation de correspondance entre la chanson et les informations d'horloge d'alarme, et mémoriser l'association et la relation de correspondance dans le système de musique sans fil ;
et après la mémorisation de l'association et de la relation de correspondance dans le système de musique sans fil, le procédé comprend en outre les étapes consistant à : déterminer si le terminal de commande est actuellement dans un état d'accès lorsque le temps d'horloge d'alarme arrive, et si tel est le cas, lire la chanson correspondant aux informations d'horloge d'alarme via le système de musique sans fil.

4. Procédé de réglage d'une horloge d'alarme d'un système de musique sans fil selon la revendication 2, dans lequel les informations d'horloge d'alarme comprennent en outre des informations spécifiées d'un dispositif de lecture ;
la lecture de la sonnerie d'horloge d'alarme via le système de musique sans fil comprend : la commande du dispositif de lecture correspondant aux informations spécifiées dans le système de musique sans fil pour lire la sonnerie d'horloge d'alarme.

5. Procédé de réglage d'une horloge d'alarme d'un système de musique sans fil selon la revendication 3, dans lequel les informations d'horloge d'alarme comprennent en outre des informations spécifiée d'un dispositif de lecture ;
la lecture de la chanson correspondant aux informations d'horloge d'alarme via le système de musique sans fil comprend : la commande du dispositif de lecture correspondant aux informations spécifiées dans le système de musique sans fil pour lire la chanson correspondant aux informations d'horloge d'alarme.

6. Procédé de réglage d'une horloge d'alarme d'un système de musique sans fil selon l'une quelconque des revendications 1 à 5, dans lequel l'acquisition d'informations d'identification et d'horloge d'alarme du terminal de commande de manière automatique lors de la détection d'un accès du terminal de commande par le système de musique sans fil comprend les étapes consistant à :
acquérir l'identification du terminal de commande lors de la détection de l'accès du terminal de commande par le système de musique sans fil ; et
envoyer une demande d'acquisition des informations d'horloge d'alarme au terminal de commande, et recevoir les informations d'horloge d'alarme renvoyées depuis le terminal de commande.

7. Procédé de réglage d'une horloge d'alarme d'un système de musique sans fil selon l'une quelconque des revendications 1 à 6, dans lequel après la mémorisation de l'association dans le système de musique sans fil, le procédé plus loin comprend :
la suppression de l'association depuis le système de musique sans fil s'il est déterminé que la durée de non-accès du terminal de commande avec l'identification a atteint une durée prédéfinie.

8. Système de musique sans fil (20) comprenant, une pluralité de dispositifs de lecture (30) ;
une unité d'acquisition d'horloge d'alarme (210), configurée pour : acquérir de manière automatique des informations d'identification et d'horloge d'alarme d'un terminal de commande (10) lors de la détection d'un accès du terminal de commande ; et établir une association entre les informations d'identification et d'horloge d'alarme, et mémoriser l'association dans le système de musique sans fil (20) ; et
une unité de mise à jour d'horloge d'alarme (220), configurée pour : acquérir des informations d'horloge d'alarme mises à jour lors de la détection d'une mise à jour des informations d'horloge d'alarme du terminal de commande (10) ; et mettre à jour les informations d'horloge d'alarme associées au terminal de commande (10) dans le système de musique sans fil (20).

9. Système de musique sans fil (20) selon la revendication 8, dans lequel les informations d'horloge d'alarme comprennent le temps d'horloge d'alarme et la sonnerie d'horloge d'alarme ; le système de musique sans fil(20) comprend en outre une unité de commande d'horloge d'alarme (230), qui est configurée pour : acquérir l'identification du terminal de commande à accès en cours (10), rechercher et activer les informations d'horloge d'alarme associées à l'identification ; et lire la sonnerie d'horloge d'alarme via le système de musique sans fil (20) lorsque le temps d'horloge d'alarme arrive.

10. Système de musique sans fil (20) selon la revendication 8, dans lequel les informations d'horloge d'alarme comprennent le temps d'horloge d'alarme ; l'unité d'acquisition d'horloge d'alarme (210) comprend un module de réglage qui est configuré pour : rechercher l'enregistrement de lecture historique correspondant à l'identification mémorisée dans le système de musique sans fil, trouver la chanson la plus lue du terminal de commande (10) avec l'identification dans le système de musique sans fil (20) ; et établir une relation de correspondance entre la chanson et les informations d'horloge d'alarme, et mémoriser l'association et la relation de correspondance dans le système de musique sans fil (20) ;
le système de musique sans fil (20) comprend en outre une unité de commande d'horloge d'alarme (230), qui est configurée pour : déterminer si le terminal de commande (10) est actuellement dans un état d'accès lorsque le temps d'horloge d'alarme arrive et, si tel est le cas, lire la chanson correspondant aux informations d'horloge d'alarme via le système de musique sans fil (20).

11. Système de musique sans fil (20) selon la revendication 9 [[11]], dans lequel les informations de station d'horloge d'alarme comprennent en outre des informations spécifiées d'un dispositif de lecture (30) ; et l'unité de commande d'horloge d'alarme (230) est configurée pour : déterminer si le terminal de commande (10) est actuellement dans un état d'accès lorsque le temps d'horloge d'alarme arrive ; et si tel est le cas, commander le dispositif de lecture (30) correspondant aux informations spécifiées dans le système de musique sans fil (20) pour lire la sonnerie d'horloge d'alarme.

12. Système de musique sans fil (20) selon la revendication 10, dans lequel les informations d'horloge d'alarme comprennent en outre des informations spécifiées d'un dispositif de lecture (30) ; l'unité de commande d'horloge d'alarme (230) est configurée pour : acquérir l'identification du terminal de commande à accès en cours (10), rechercher et activer les informations d'horloge d'alarme associées à l'identification ; et commander le dispositif de lecture (30) correspondant aux informations spécifiées dans le système de musique sans fil (20) pour lire la chanson correspondant aux informations d'horloge d'alarme lorsque le temps d'horloge d'alarme arrive.

13. Système de musique sans fil (20) selon l'une quelconque des revendications 8 à 12, dans lequel l'unité d'acquisition d'horloge d'alarme (210) comprend un module de réglage qui est configuré pour : acquérir l'identification du terminal de commande (10) lors de détecter de l'accès du terminal de commande (10) ; et envoyer une demande pour acquérir les informations d'horloge d'alarme au terminal de commande (10) et recevoir les informations d'horloge d'alarme renvoyées depuis le terminal de commande (10).

14. Système de musique sans fil (20) selon l'une quelconque des revendications 8 à 13, dans lequel l'unité de mise à jour d'horloge d'alarme (230) est configurée en outre de manière à supprimer l'association depuis le système de musique sans fil (20) s'il est déterminé que la durée de non-accès du terminal de commande (10) avec l'identification a atteint une durée prédéfinie.

15. Appareil, comprenant :
un ou plusieurs processeurs ;
une mémoire ; et
un ou plusieurs programmes mémorisés dans la mémoire qui, lorsqu'ils sont exécutés par les un ou plusieurs processeurs, sont adaptés pour exécuter le procédé selon l'une quelconque des revendications 1 à 7.
